(19)

Europäisches
Patentamt
European
Patent Office
Office européen
des brevets

(11) **EP 1 942 139 B1**

(12) **EUROPEAN PATENT SPECIFICATION**

(45) Date of publication and mention
of the grant of the patent:
**18.04.2012 Bulletin 2012/16**

(21) Application number: **06791190.9**

(22) Date of filing: **30.09.2006**

(51) Int Cl.:
**C08L 29/04** $^{(2006.01)}$

(86) International application number:
**PCT/CN2006/002604**

(87) International publication number:
**WO 2007/036169 (05.04.2007 Gazette 2007/14)**

(54) **METHOD FOR PREPARING A HYDROPHOBIC BIODEGRADABLE MATERIAL**

VERFAHREN ZUR HERSTELLUNG EINES HYDROPHOBEN BIOLOGISCH ABBAUBAREN
MATERIALS

PROCÉDÉ DE PRÉPARATION D'UN MATERIAU BIODEGRADABLE HYDROPHOBE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **30.09.2005 CN 200510105197**

(43) Date of publication of application:
**09.07.2008 Bulletin 2008/28**

(73) Proprietor: **Li, Xiaolu
Beijing 100036 (CN)**

(72) Inventor: **Li, Xiaolu
Beijing 100036 (CN)**

(74) Representative: **Rees, David Christopher et al
Kilburn & Strode LLP
20 Red Lion Street
London WC1R 4PJ (GB)**

(56) References cited:
**CN-A- 1 073 457    CN-A- 1 330 683
US-A- 4 542 178    US-A- 5 308 879
US-A- 5 322 866    US-A1- 2005 029 703**

- **WANG HUICAI ET AL.: 'STUDY ON THE
BLENDING OF PVAL/STARCH' ENGINEERING
PLASTICS APPLICATION vol. 32, no. 2, 2004,
pages 27 - 29, XP008078885**

## Description

## Technical Field

The present invention relates to a method for preparing a hydrophobic biodegradable material.

## Technical Background

CN 1405230A discloses a water-soluble and pollution-free plastic molded material which can be completely biodegraded within a short period. The material comprises polyvinyl alcohol, glycerol, triethylene glycol, sorbitol, fiber, white carbon black, superfine calcium carbonate, and modified starch. CN1405230A further discloses the preparation method for the material, which comprises adding 1-30 parts of glycerol into polyvinyl alcohol, stirring at high temperature to make the mixture be fully wetted; adding appropriate amount of plasticizer, cross linking agent, reinforcing agent, modifier, and filler; blending and reacting at 25-65°C for 5-50 min; charging into a single-screw or twin-screw extruder for granulation to obtain beads; and moding the beads at temperature of 150-250°C into film or foam. Unfortunately, when thermoplastically extruding the material prepared by the method disclosed in CN 1405230A at 160-190°C, the present inventor found that only a small amount of the material was in molten state, and the material became carbonized when heated to 200°C. This phenomenon indicates that, the material is not a thermoplastic material, can not be blow molded into film in molten state, and only can be prepared into cast film by casting method requiring no heat melting.

CN1357563A discloses a method for preparing starch-polyvinyl alcohol-polyester ternary system biodegradable film, characterized in that the raw materials comprise (by weight percentage): starch 30-65%, polyvinyl alcohol 15-40%, polyester 0-10%, plasticizer 10-20%, reinforcing agent ≤ 0.4%, wet strength agent 0.5-1.5%, and defoaming agent ≤ 0.4%, wherein the plasticizer is water and a ternary system of glycol, glycerol, and polyester polyol at weight ratio of 1-3:9-15:3-6. The biodegradable film is prepared by: firstly mixing polyvinyl alcohol and starch, then mixing with aqueous solution containing reinforcing agent, wet strength agent, and defoaming agent dissolved therein, further mixing with plasticizer, stirring evenly, extruding and granulating. The obtained material, like the material disclosed in CN 1405230A, is not a thermoplastic material, can not be blow molded into film in molten state, and only can be prepared into cast film by casting method requiring no heat melting.

It is well known that, it is not easy to control the thickness of cast film during preparation, and usually the obtained cast film has large and nonuniform thickness. Additionally, compared with thermoplastically blow molded film, the cast film is poor in mechanical properties such as tensile strength at break, elongation at break, and right angle tear strength, and can not satisfy general requirements for mechanical properties of film product. Moreover, the casting method can only produce film product, and can not produce injection molded, foamed or extruded sheet product. Therefore, material containing polyvinyl alcohol is required to be capable of being foam molded in molten state to form foam product.

## Summary of the Invention

The object of the present invention is to overcome the disadvantages that the available polyvinyl alcohol-containing biodegradable material of the prior art is hard to be foam molded, and to provide a hydrophobic biodegradable material capable of being foam molded into foam product.

In order to make polyvinyl alcohol-containing biodegradable material achieve molten state, as a result of intensive studies on polyvinyl alcohol, the present inventor finds that a lot of hydroxyl groups exist in polyvinyl alcohol molecules, and form strong hydrogen bonding interaction therebetween, therefore, a lot of hydrogen bonds exist among and in polyvinyl alcohol molecules. Additionally, polyvinyl alcohol molecules are flexible, the molecules interweave together to form complicated molecule chain structure with high barrier property, and the interaction among the polymer molecules is much stronger than Van Der Waals Force among molecules of general compounds; therefore, higher melting temperature is required to overcome the interaction. In fact, polyvinyl alcohol has molten temperature up to 220-240°C which is higher than decomposition temperature thereof (about 200°C). As the molten temperature of polyvinyl alcohol is higher than its decomposition temperature, polyvinyl alcohol usually becomes decomposed and carbonized before melting, and can not reach stable molten state. On the other hand, only in molten state can polyvinyl alcohol react with components like starch to give stable molten biodegradable material. Hence, the available polyvinyl alcohol-containing biodegradable material can not realize molten state for thermoplastic processing since original hydrogen bonding interaction of polyvinyl alcohol can not be broken under aforementioned processing conditions.

It is presumed by the present inventor that, although the method disclosed in CN 1405230A adopts glycerol as plasticizer for plasticizing polyvinyl alcohol, the plasticizer can not break interwoven interaction among polyvinyl alcohol molecules, and can not penetrate into polyvinyl alcohol molecules; the mixing between the plasticizer and polyvinyl alcohol is just a simple physical blending, polyvinyl alcohol in the mixture is still in its original state, and the plasticizer can not exert plasticizing and modification actions to polyvinyl alcohol; therefore, the plasticizer can not lower melting temperature of polyvinyl alcohol, and can not help polyvinyl alcohol achieve molten state, nor help mixture of polyvinyl alcohol, plasticizer and starch achieve molten state.

The preparation method disclosed in CN1357563A comprises mixing polyvinyl alcohol and starch, and then adding aqueous solution thereto. As water absorbance of starch is much higher than that of polyvinyl alcohol, most added water is quickly absorbed by starch, only a small amount of water is absorbed by polyvinyl alcohol, and most polyvinyl alcohol is still in its original physical state, i.e., flocculent, granular, or powdery states at room temperature. As starch swells and gelatinizes to coat polyvinyl alcohol therein after absorbing water, contact between water and polyvinyl alcohol is blocked, water and polyvinyl alcohol can not contact with each other regardless of the amount of the added water, and most polyvinyl alcohol is still in its original state and can not achieve molten state. Moreover, the added plasticizer still can not enter into polyvinyl alcohol to exert plasticizing function, and can only be absorbed by starch, therefore the aforementioned mixture is a simple mixture of water-containing starch, polyvinyl alcohol, plasticizer, and auxiliary agents, and still can not achieve molten state.

It is well known to those skilled in the art that the conventional process of granulation and subsequent blow molding comprises heating to melt a mixture in a single-screw or twin-screw extruder to make the mixture in molten state, and at the same time the material is required to have a certain fluidity, only such molten material can be blow molded at the die of a film blower. However, the polyvinyl alcohol-containing materials of the prior art, such as the materials disclosed in CN1357563A and CN 1405230A, are all simple mixtures, in which polyvinyl alcohol is essentially not plasticized, and most polyvinyl alcohol exists in its original state. When these simple mixtures are heated, if the heating temperature is higher than the melting temperature of polyvinyl alcohol, at least part of polyvinyl alcohol is decomposed and carbonized before melting; in the other hand, if the heating temperature is lower than the melting temperature, polyvinyl alcohol can not melt, such that polyvinyl alcohol can not realize real blending and reacting with plasticizer and starch in molten state to form stable molten reaction product, and hence the mixtures can not realize foam molding.

In general, water is disbeneficial to the processing of thermoplastic material, free water has no compatibility with thermoplastic material, which can lead to generation of a lot of bubbles even crackings during processing of thermoplastic material, hence the appearance and physical properties of the product are severely damaged. Therefore, water content in raw materials and water present in the processing have to be stringently controlled during the processing of thermoplastic material.

Surprisingly, the present inventor has found that a mixture, prepared by mixing water and polyvinyl alcohol first, allowing polyvinyl alcohol to be fully swollen by water to form water-containing polyvinyl alcohol, further adding polyol and starch, and mixing evenly, can be extruded and granulated in molten state to give hydrophobic biodegradable granular material which can reach stable melting temperature significantly lower than decomposition temperature thereof. The main granular material has a melting temperature of 130-210°C, preferably 140-200°C, decomposition temperature of 260-420°C, preferably 270-410°C, and good thermoplasticity (processability), which can be prepared into foam product by mixing it with a foaming agent and foam molding. The possible explanation is that: water has very small molecular weight; when water contacts with polyvinyl alcohol alone, water can easily enter into internal structure of polyvinyl alcohol molecules to open polyvinyl alcohol molecule chains to make originally interwoven polyvinyl alcohol molecule chains fully extend, and allow the plasticizer to more easily enter into polyvinyl alcohol to jointly plasticize and modify polyvinyl alcohol; the fully plasticized and modified polyvinyl alcohol can be heated into stable molten state, and can react with starch and plasticizer in molten condition to obtain reaction product. The reaction product has stable melting temperature of 130-210°C which is significantly lower than its decomposition temperature of 260-420°C. The aforementioned properties determine that the reaction product is a completely new thermoplastic material, and make it possible to thermoplastically mold biodegradable material.

The present invention provides a method for preparing a hydrophobic fully biodegradable material containing a main material and a foaming agent, wherein the main material is a product formed by melting a mixture containing polyol and water-containing polyvinyl alcohol, and optionally containing starch; and the polyvinyl alcohol is hydrophobic polyvinyl alcohol. The polyol is one or more selected from ethylene glycol, diethylene glycol, propylene glycol, glycerol, sorbitol, polyethylene glycol or its low molecular weight condensate (molecular weight of 400 or lower), pentaerythritol, and incomplete esterification product of long-chain fatty acid (such as glycerol monostearate).

The main material contained in the hydrophobic biodegradable material provided by the method of the present invention is a product formed by melting a mixture, and has a melting temperature of 130-210°C which is much lower than its decomposition temperature of 260-420°C, therefore the material can reach molten state, has thermoplastic processability incomparable to that of common mixture obtained by simple physical mixing of polyvinyl alcohol, starch, and polyol, and can achieve real extrusion granulation and foam molding.

The hydrophobic biodegradable material can be prepared into various foam product by foam molding, such as salve, dinner box, bowl, cup, foam fabrics, shockproof material, and soundproof material. The obtained foam product has excellent foaming ratio higher than 45%, compress strength no less than 35 kPa, resilience rate and dimension stability. The obtained foam product also has extremely high biodegradation degree (more than 62% for 45 days, more than 76% for 60 days, and more than 93% for 99 days), which complies with the requirement (more than 90% within 180 days) for biodegradable product prescribed in ISO 14855. As the polyvinyl alcohol is hydrophobic polyvinyl alcohol and the material is hydrophobic, the prepared film product has not any deformation and has little change in mechanical properties after being soaked in water at room temperature for 1h, indicating that the product has excellent water-resistance. By adding organic carboxylic acid during preparation of the main material contained in the hydrophobic biodegradable material, foam product prepared from the material can be prevented from sticking with each other.

**Brief Description of Drawings**

Fig.1 is the differential scanning calorimetry (DSC) curve of the main material contained in the hydrophobic biodegradable material prepared by the example 1 of the present invention;

Fig.2 is the thermogravimetric curve of the main material contained in the hydrophobic biodegradable material prepared by the example 1 of the present invention;

Fig.3 is the scanning electron microscope (SEM) image of original starch used in the example 1 of the present invention;

Fig.4 is the SEM image of the cross section of the main material contained in the the hydrophobic biodegradable material in the example 1 of the present invention.

**Detailed Description of the Preferred Embodiments**

The hydrophobic fully biodegradable material provided by the present invention comprises a main material and a foaming agent, wherein the main material is a product formed by melting a mixture containing polyol and water-containing polyvinyl alcohol, and optionally containing starch; and the polyvinyl alcohol is hydrophobic polyvinyl alcohol. The polyol is one or more selected from ethylene glycol, diethylene glycol, propylene glycol, glycerol, sorbitol, polyethylene glycol or its low molecular weight condensate (molecular weight of 400 or lower), pentaerythritol, and incomplete esterification product of long-chain fatty acid (such as glycerol monostearate).

Based on total weight of the mixture, the content of the water-containing polyvinyl alcohol may be 10-85 wt%, preferably 15-60 wt%; the content of starch is 0-85 wt%, preferably 20-75 wt%; and the content of polyol is 5-50 wt%, preferably 10-40 wt%.

The main material contained in the hydrophobic biodegradable material provided in the present invention has a melting temperature of 130-210°C, preferably 140-200 ° C, and a decomposition temperature of 260-420°C, preferably 270-410°C. The melting temperature is significantly lower than the decomposition temperature, such that the material is very suitable for thermo-processing. For example, in the example 2, the mixture contains 27 wt% of water-containing polyvinyl alcohol, 50 wt% of starch, 15 wt% of glycerol, 5 wt% of borax, and 4 wt% of epoxidized soybean oil; and the resulting main material has a melting temperature of 147-190°C, and a decomposition temperature of 273-380°C. The melting temperature and decomposition temperature of the obtained main materials may vary depending on the content of each component.

In said water-containing polyvinyl alcohol, the weight ratio of polyvinyl alcohol to water is 0.75-10, preferably 1-6.

The polyvinyl alcohol has general formula of $-(CH_2CHOH)_n-$, which is white or pale yellow flocculent, granular, or powdery solid at ambient temperature. Polyvinyl alcohol is mainly obtained by alcoholyzing polyvinyl acetate, i.e. reducing polyvinyl acetate. According to the present invention, the polyvinyl alcohol can be any available hydrophobic polyvinyl alcohol which can be prepared by any known method or purchased. The hydrophobic polyvinyl alcohol refers to polyvinyl alcohol only dissolvable in water above 45 °C. According to the present invention, the hydrophobic polyvinyl alcohol has an alcoholysis degree of 80-100%, preferably 85-98%, and median polymerization degree from more than 2000 to 3000, preferably 2050-3000. The median polymerization degree represents the size of the polyvinyl alcohol molecule, that is, a higher median polymerization degree indicates a higher number average molecular weight and a stronger hydrophobicity of the polyvinyl alcohol.

The polyol is preferably one or more selected from glycerol, sorbitol and pentaerythritol. P olyol can exert plasticizing action on polyvinyl alcohol. The polyol can be used alone or in combination of two or more, and is preferably used in combination.

Additionally, the mixture may further comprise cellulose-based polymer which can also exert plasticizing action on polyvinyl alcohol. The cellulose-based polymer is one or more selected from carboxyl methyl cellulose (CMC), methyl cellulose, ethyl cellulose, hydroxypropyl methyl cellulose (HPMC), and hydroxypropyl ethyl cellulose. B ased on the total weight of the mixture, the content of the cellulose-based polymer may be 0-10 wt%, preferably 2-6 wt%. The starch can be various starches in prior arts, such as natural starch or modified starch. The natural starch can be one or more selected from corn starch, potato starch, sweet potato starch, tapioca starch, wheat starch, and bean starch, which can be branched starch and/or linear starch. Examples of the modified starch include but are not limited to oxidized starch, esterified starch, and etherified starch. The esterified starch can be one or more selected from starch phosphate, starch sulfate, starch nitrate, starch acetate, and starch propionate. The etherified starch can be one or more selected from carboxy starch, cyano starch, amide starch, hydroxyalkyl starch, alkyl starch, aryl starch, primary amine starch ether, secondary amine starch ether, ternary amine starch ether, onium starch ether, and cyanamide starch. The addition of the starch can correspondingly decrease the content of the polyvinyl alcohol, such that the cost of the raw material for the hydrophobic biodegradable material due to the far lower price of the starch especially common starch than that of the polyvinyl alcohol. The biodegradability of the hydrophobic biodegradable material may be improved by the addition of the starch. However, the addition of the starch may adversely affect the water-resistance of the material due to the hydrophilicity of the starch, and the mechanical properties of the product prepared therefrom are relatively lowered. Take the biodegradability, water-resistance, mechanical properties, and cost into consideration, the composition of the material may vary according to the practical demand. According to the present invention, the mixture may contain 0-70 wt%, preferably 10-65 wt% of starch based on its total weight.

The mixture may further contain a polyester in order to further improve the water-resistance of the hydrophobic biodegradable material. Any hydrophobic polyester compound, for example the polyester compound having ester group as side chain, may be used. The polyester compound may be aliphatic and/or aromatic polyester compound. The aliphatic polyester compound includes, but is not limited to polycaprolactone, polycarbonate, poly β-hydrobutyrate (PHB), and PHB is preferred. Based on the total amount of the mixture, the content of the polyester may be 0-20 wt%, preferably 0.5-15 wt%, and more preferably 3-10 wt%.

Another approach to improve the water-resistance of the hydrophobic biodegradable material is to block the hydrophilic hydroxyl in the component such as the water-containing polyvinyl alcohol by any conventional method. For example, the hydroxyl may be blocked by the crosslink condensation between the polyvinyl alcohol molecules to generate hydrophobic ether bond, while the polymerization degree and molecular weight are increased, leading to the improvement of the water-resistance. Alternatively, the hydroxyl may be blocked by using other end-capping reagent to convert the hydroxyl into a hydrophobic group. Accordingly, the mixture may further contain an end-capping reagent in order to further improve the water-resistance of the hydrophobic biodegradable material according to the present invention. The end-capping reagent may be one or more selected from borax, boric acid, formaldehyde, bialdehyde, trimethyl melamine, bimethyl urea, bimethyl ethyl urea, dichromate, chromium nitrate, and organotitanate. The bialdehyde includes, but is not limited to glyoxal, malonaldehyde, succindialdehyde, glutaraldehyde and isomer thereof, hexanedialdehyde and isomer thereof, pimelic dialdehyde and isomer thereof, and suberic dialdehyde and isomer thereof. Based on the total amount of the mixture, the content of the end-capping reagent may be 0-15 wt%, preferably 0.5-15 wt%, and more preferably 0.5-10 wt%.

Additionally, the present inventor has found that products (such as foam product) prepared from the composition containing aforementioned components are prone to sweating (i.e., many oily liquid beads on its surface) at ambient condition with temperature above 23° C and relative humidity above 60%, and sticking is likely to occur among multiple products due to the stickiness of the oily liquid beads, which brings inconvenience for use. The present inventor also found that the problem could be solved by adding organic carboxylic acid to the mixture. Accordingly, the mixture can further contain organic carboxylic acid at the content of 0-10 wt%, preferably 0.5-8 wt%, and more preferably 2-7 wt% based on the total weight of the mixture.

The organic carboxylic acid can be one or more of $C_{1-20}$ carboxylic acids, preferably one or more of $C_{1-12}$ carboxylic acids. The organic carboxylic acid can be monocarboxylic acid or polycarboxylic acid, which can be, but not limited to, formic acid, acetic acid, propionic acid, butyric acid and isomers thereof, pentanoic acid and isomers thereof, caproic acid and isomer thereof, heptanoic acid and isomer thereof, caprylic acid and isomer thereof, nonanoic acid and isomer thereof, capric acid and isomer thereof, malonic acid, butanedioic acid and isomer thereof, pentanedioic acid and isomer thereof, hexanedioic acid and isomer thereof, heptanedioic acid and isomer thereof, octanedioic acid and isomer thereof, azelaic acid and isomer thereof, decanedioic acid and isomer thereof, citric acid, tartaric acid, lauric acid, or benzoic acid.

The mixture may optionally further contain salt additive which can be one or more selected from alkyl sulfonate, iron salt of organic acid, polyhydroxy butyrate, stearate salt such as calcium stearate, magnesium stearate, zinc stearate, barium stearate, cerium stearate, and iron stearate, calcium carbonate, calcium dicarbonate, light calcium carbonate, and shell powder, preferably one or more of calcium stearate, zinc stearate, and iron stearate. This additive can be used as lubricant for reducing the friction among components of the material, and between the material and processing equipment. The additive can be used alone or in combination of two or more, and is preferably used in combination. The content of the salt additive may be 0-5 wt%, preferably 0.2-2 wt% based on the total weight of the mixture.

The mixture may further contain conventional auxiliary agents as needed. The auxiliary agent can be one or more of antioxidant, light/heat stabilizer, photo-oxidant, antifogging agent, fire retardant, antistatic agent, coupling agent, colorant, and lubricant. The amount and kind of the used auxiliary agent have been known to those skilled in the art, for example, based on the total weight of the mixture, the content of the auxiliary agent can be 0-5 wt%, preferably 0.3-4 wt%. For preventing and suppressing early degradation of starch due to factors like light, heat, oxygen, microorganism or bacteria during processing, antioxidant and light/heat stabilizer can be added. The antioxidant can be one or more selected from pentaerythritol tetrakis [β-(3,5-di-tert-butyl-4-hydroxyl phenyl)propionate] (antioxidant 1010), distearyl thiodipropionate (antioxidant DSTP), sulfur-containing ester, phosphite ester, composite antioxidant PKY, and biphenol A. Light/heat stabilizer can be one or more selected from UV-series light/heat stabilizer, carbon black, organotin light/heat stabilizer, tri(nonylphenyl) phosphate (TNPP), and epoxidized soybean oil; wherein the UV-series light/heat stabilizer can be α-hydroxy-4-(octyloxy)benzophenone (UV531), and the organotin light/heat stabilizer can be one or more selected from dibutyl tin dilaurate, isooctyl thioglycolate dimethyl tin, ester-based tin compound RWS-784, di-n-octyltin-bis(2-ethylhexyl thioglycolate) (SD 8831), dibulyltin maleate, and di-n-butyltin-bis(2-ethylhexyl thioglycolate). The lubricant may be any conventional ones, such as liquid paraffin and/or petroleum ether, which can lower the friction between the granular material, product and the equipment in order to facilitate the demolding. Those auxiliary agents can be used alone or in combination of two or more.

The foaming agent contained in hydrophobic biodegradable material provided in the present invention can be water or a chemical foaming agent, and the chemical foaming agent is preferred. The kind of the chemical foaming agent has been well known to those skilled in the art, and can be one or more selected from N-nitro compounds, azo compounds, and hydrazide foaming agents. N-nitro compound includes but is not limited to N,N-dinitropentamethylenetetramine (DPT), and N,N-dimethyl-N,N-dinitroterephthalamide (NTA). The azo compound includes but is not limited to azodicarbonamide(AC), azobisisobutyronitrile, diisopropyl azodicarboxylate, diethyl azodicarboxylate, bisaminoazobenzene, and barium azodicarboxylate. The hydrazide foaming agent includes but is not limited to 4,4-oxybis(benzene sulfonyl hydrazide) (OBSH), 4-substituted benzene sulfonyl hydrazide, diphenyl sulfone-3,3'-disulfonyl hydrazide, 4,4-oxybis (benzene sulfonyl hydrazide), benzene-1,3-disulphohydrazide and benzene-1,4-disulphohydrazide. Among them, AC foaming agent, DPT foaming agent or DBSH foaming agent is preferred. In the hydrophobic biodegradable material, the weight ratio of the main material to the foaming agent is about 10: 1 to 1000: 1, preferably 15: 1 to 100: 1.

The hydrophobic biodegradable material provided in the present invention can be prepared by heating to melt a mixture containing polyol and water-containing polyvinyl alcohol, and optionally containing starch, and then extruding and granulating the molten material to obtain the main material; and mixing the main material and the foaming agent.

The water-containing polyvinyl alcohol can be prepared by contacting water with hydrophobic polyvinyl alcohol. The contact condition and the amount of polyvinyl alcohol and water are sufficient to fully swell polyvinyl alcohol. The full swelling of polyvinyl alcohol refers to the weight ratio of polyvinyl alcohol to water in the swollen polyvinyl alcohol, i.e. water-containing polyvinyl alcohol, is 0.75-10, preferably 1-6.

The reason for contacting water with the hydrophobic polyvinyl alcohol is that water has small molecular weight, when water contacts with the hydrophobic polyvinyl alcohol alone, water can easily penetrate into inside of polyvinyl alcohol molecule structure to break intermolecular and inner molecular hydrogen bonds of polyvinyl alcohol, extend complicated interwoven polyvinyl alcohol molecule chain to the maximum degree, and help polyol plasticizer enter into internal structure of polyvinyl alcohol molecules, therefore polyvinyl alcohol melting temperature is lowered, and polyvinyl alcohol-containing mixture can realize molten state.

For fully swelling polyvinyl alcohol, the weight ratio of the usage amount of polyvinyl alcohol to the usage amount of water is preferably 0.5-5, more preferably 1-4. Since the hydrophobic polyvinyl alcohol can be only dissolved into water higher than 45°C, the hydrophobic polyvinyl alcohol may be contacted with water at a temperature higher than 45°C, preferably 80-105°C (1 atmosphere). It is preferred to add warm water lower than 60°C to the polyvinyl alcohol and then gradually raise the system temperature to 80-105°C under stirring, in order to avoid encrustation or the problem that the exterior of polyvinyl alcohol is swelled while the interior of polyvinyl alcohol is not swelled caused by the direct addition of hot water to the polyvinyl alcohol. The hydrophobic polyvinyl alcohol is preferably contacted with water at a temperature of 80-105° C for 30-60 min under stirring of 50-650 rpm. As mixture of water and polyvinyl alcohol has high viscosity, and stirring resistance is high, a lot of heat will be generated during stirring, the heat will make added water be partially evaporated off. More heat will be generated and more water will be evaporated off as the stirring time is prolonged and the stirring speed is increased. Therefore, at aforementioned contact condition and weight ratio of the used polyvinyl alcohol to the used water, the obtained water-containing polyvinyl alcohol has weight ratio of polyvinyl alcohol to water slightly higher than the weight ratio of the usage amount of polyvinyl alcohol to the usage amount of water. When stirring speed is fast and/or stirring time is long, the amount of the used water can be increased as needed to make the weight ratio of polyvinyl alcohol to water in water-containing polyvinyl alcohol within 0.75-10, preferably 1-6.

The mixture containing polyol and water-containing polyvinyl alcohol, and optionally containing starch can be prepared by evenly mixing aforementioned water-containing polyvinyl alcohol, polyol, and optionally contained starch.

When the water-containing polyvinyl alcohol, polyol, and optionally contained starch are mixed, one or more of polyester, end-capping reagent, and organic carboxylic acid is preferably added.

When the water-containing polyvinyl alcohol, polyol, and optionally contained starch are mixed, one or more of cellulose-based polymer, salt additive, and auxiliary agent may be added and mixed evenly.

The mixing is preferably carried out under stirring at a stirring speed of 50-650 rpm.

The mixing of components in the mixture can be carried out in random order, for example, water-containing polyvinyl alcohol and optionally contained starch can be mixed evenly, and then mixed with polyol; or optionally contained starch and polyol can be mixed evenly, and then mixed with water-containing polyvinyl alcohol; or water-containing polyvinyl alcohol and polyol are mixed evenly, and then mixed with optionally contained starch; or water-containing polyvinyl alcohol, polyol, and optionally contained starch are mixed evenly. In preferred embodiment, for making polyol exert better plasticization action on water-containing polyvinyl alcohol, water-containing polyvinyl alcohol and polyol are mixed evenly, and then mixed with optionally contained starch.

Based on total weight of the mixture, the water-containing polyvinyl alcohol is added at the amount of 10-85 wt%, preferably 15-60 wt%; polyol is added at the amount of 5-50 wt%, preferably 10-40 wt%; starch is added at the amount of 0-85 wt%, preferably 20-75 wt%; the polyester is added at the amount of 0-20 wt%, preferably 3-10 wt%; the end-capping reagent is added at the amount of 0-15 wt%, preferably 0.5-10 wt%; the organic carboxylic acid is added at the amount of 0.5-10 wt%, preferably 0.5-8 wt%; cellulose-based polymer is added at the amount of 0-10 wt%, preferably 2-6 wt%; salt additive is added at the amount of 0-5 wt%, preferably 0.2-2 wt%; and auxiliary agent is added at the amount of 0-5 wt%, preferably 0.3-4 wt%.

The method and condition for heat melting the mixture, extruding, and granulating are well known to those skilled in the art. For example, twin-screw extruder can be used for extruding and granulating the mixture at the conditions that the twin-screw extruder has length/diameter ratio of 20-64 and screw rotation speed of 50-1500 rpm. The twin-screw extruder is usually divided into 12 sections from feed end to discharge end, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C. The fourth and tenth sections are vacuum sections, and the vacuum degree is 0.02-0.09 MPa. The vacuum degree refers to absolute value of difference between absolute pressure and atmospheric pressure (the absolute pressure is lower than the atmospheric pressure). Twin screws of the twin-screw extruder are engaged mutually, when the screw rotation speed is high, such as 500 rpm or higher, the engaged twin screws have intensive friction and shearing actions on material charged into the extruder, and the heat generated from friction and shearing can make real temperature of the material higher than the set temperature of each section.

The main material and the foaming agent may be mixed by any conventional method. For example, powdery foaming agent may be incorporated in the main material and mixed well. In order to mix them evenly it is preferred to dissolve the chemical foaming agent in a solvent to form a solution and to immerse the main material in the solution. The solvent may be any one that will not react with the foaming agent or the main material and can be easily removed, and is usually dimethyl sulfoxide (DMSO) or N,N-dimethyl formide. The solution has a lowest concentration of 0.5 wt%, and a highest concentration when the chemical foaming agent is saturated. The immersing is preferably performed in autoclave at a temperature of 20-105°C under a pressure of 0.15-15 MPa for 3-360 min. After immersing, the solvent is removed preferably under decreased pressure. Water may be used as the foaming agent to soak the main material.

The detailed steps for preparing the inventive material provided in the present invention are as below:

(1) Allowing polyvinyl alcohol to contact with water and fully swell for 30-60 min under stirring of 50-650rpm to give water-containing polyvinyl alcohol, and mixing evenly the water-containing polyvinyl alcohol, polyol, and optionally contained starch, polyester, end-capping reagent, organic carboxylic acid, and optically cellulose-based polymer, salt additive and auxiliary agent for 5-60min under stirring of to give a mixture, wherein upon mixing the water-containing polyvinyl alcohol, starch, polyol, organic carboxylic acid, and optionally cellulose-based polymer, salt additive and/or auxiliary agent, the stirring is preferably carried out at a low speed first and then at a high speed;

(2) Adopting twin-screw extruder with length/diameter ratio of 20-64 and screw rotation speed of 50-1200rpm, wherein from the feed end to discharge end, temperatures for each section are sequentially set at 90-150°C, 95-155°C, 100-160°C, 115-165°C, 120-175°C, 125-175°C, 130-185°C, 135-185°C, 110-180°C, 115-175°C, 120-185°C, and 130-180°C, vacuum degree of the vacuum sections is 0.02-0.09 MPa, and the mixture is melted, extruded, and granulated to obtain the main material; and

(3) mixing the main material with the foaming agent to obtain the hydrophobic biodegradable material provided in the present invention, wherein the mixing may be performed by immersing the main material in the solution of the chemical foaming agent in autoclave at a temperature of 20-105°C under a pressure of 0.15-15 MPa for 3-360 min. After immersing, the solvent is removed preferably under decreased pressure. Water may be used as the foaming agent to soak the main material.

The hydrophobic biodegradable material provided in the present invention can be prepared into foam product by foam molding. The foam molding method procedure and condition are well known to those skilled in the art, for example, the following two methods may be used:

Method 1: A single-screw extruder can be used, the single-screw extruder is usually divided into six sections from feed end to discharge end, the temperatures for each section are set at 100-155°C, 105-165°C, 110-175°C, 120-185°C, and 130-195°C, and the rotation speed of the screw is set at 50-300 rpm. The obtained hydrophobic biodegradable material is charged into the extruder, melted and extruded through a circle die to obtain a foamed material which is then vacuum suction molded and cut into the foam product; or directly extruded through a single pore and/or multiple pore die to obtain a foamed body which is then thermally cut into individual foam product.

Method 2: A two-stage single-screw extruder can be used. The first stage is usually divided into six sections from feed end to discharge end, the temperatures for each section are set at 100-155° C, 105-165°C, 110-175°C, 120-185°C, and 130-195°C, and the rotation speed of the screw of the first stage is set at 50-300 rpm. The obtained hydrophobic biodegradable material is charged into the feed port provided at the first section, melted and transferred into the second stage through a screw connecting device, and liquid Freon or butane as physical foaming aid is charged into the first stage between the fifth section and the sixth section. In the second stage single-screw extruder, the pressure is kept at 20-280 kg/cm$^2$, and the molten material extruded through a circle die to obtain a foamed material which is then vacuum suction molded and cut into the foam product by a molding device; or directly extruded through a single pore and/or multiple pore die to obtain a foamed body which is then thermally cut into individual foam product.

The present invention will be described in further detail through examples as below.

**Example 1**

This example describes the hydrophobic biodegradable material provided in the present invention, and preparation method thereof.

(1) Water is charged into polyvinyl alcohol (alcoholysis degree of 96%, and median polymerization degree of 2050) in a weight ratio of polyvinyl alcohol to water of 1.5 under stirring of 500 rpm, and the system is heated to 105°C and stirred at 105°C for 35min to give water-containing polyvinyl alcohol in which the weight ratio of polyvinyl alcohol to water is 2.3. After the system is cooled to 30° C, 55 weight parts of the obtained water-containing polyvinyl alcohol, 15 weight parts of glycerol, and 15 weight parts of sorbitol are mixed in a mixer wherein the mixer stirs at 100rpm for about 20 min and then at 200rpm for about 30min, and then 3 weight parts of methyl cellulose, 6 weight parts of PHB, 2 weight parts of zinc stearate, and 4 weight parts of epoxidized soybean oil are mixed to give mixture M1.

(2) The aforementioned mixture is charged into feed port of a twin-screw extruder with length/diameter ratio of 48: 1 and screw diameter of 58mm; the screw rotation speed is regulated to 900rpm; from feed end to discharge end, temperatures of each section are respectively set at 130°C, 135°C, 140°C, 150°C, 160°C, 165°C, 165°C, 170°C, 175°C, 170°C, 180°C and 170°C; the vacuum degree of the vacuum sections is held at 0.02 to 0.09MPa; strip extrudant with diameter of 3mm is obtained at discharge port of the extruder, which is cut into granules of the main material Z 1 with a length of 2mm.

(3) 2.5 weight parts of AC foaming agent is dissolved in 25 weight parts of DMSO to form a solution. 100 weight parts of the main material is immersed with the solution in a autoclave at 25° C under 1 MPa for 10 min, and then DMSO is removed under decreased pressure to give the hydrophobic biodegradable material BSR-07VS-FS 1 provided in the present invention.

**Example 2**

This example describes the hydrophobic biodegradable material provided in the present invention, and preparation method thereof.

(1) Water is charged into polyvinyl alcohol (alcoholysis degree of 99%, and median polymerization degree of 2450) in a weight ratio of polyvinyl alcohol to water of 2.5 under stirring of 400 rpm, and the system is heated to 90° C and stirred at 90°C for 55min to give water-containing polyvinyl alcohol in which the weight ratio of polyvinyl alcohol to water is 3.1. After the system is cooled to 35° C, 27 weight parts of the obtained water-containing polyvinyl alcohol, 50 weight parts of starch, 15 weight parts of glycerol, 3 weight parts of epoxidized soybean oil, and 5 weight parts of borax are mixed in a mixer wherein the mixer stirs at 100rpm for about 7 min and then at 200rpm for about 8min to give mixture M2.

(2) The mixture M2 is prepared into main material Z2 according to the same method as step (2) in the example 1.

(3) 4 weight parts of AC foaming agent is dissolved in 50 weight parts of DMSO to form a solution. 100 weight parts of the main material is immersed with the solution in a autoclave at 55°C under 12 MPa for 100 min, and then DMSO is removed under decreased pressure to give the hydrophobic biodegradable material BSR-07VS-FS2 provided in the present invention.

**Comparison example 1**

The comparison example describes the polyvinyl alcohol-containing biodegradable material of the prior art and preparation method thereof.

(1) 20.4 weight parts of polyvinyl alcohol (alcoholysis degree of 99% and median polymerization degree of 2450) and 50 weight parts of starch are mixed evenly in a mixer, and further mixed with 8.2 weight parts of water, 15 weight parts of glycerol, 5 weight parts of borax, and 3 weight parts of epoxidized soybean oil; the mixer stirs at 100rpm for 20min, and then stirs at 200rpm for 30min to give mixture CM1;

(2) The mixture CM1 is extruded and granulated by method similar to that of step (2) in the example 1, but only powdery carbonized substance without any plasticity is obtained. The possible explanation is that two screws of twin-screw extruder are engaged mutually, the screw ration speed is up to 900rpm, the mutually engaged twin screws have intensive friction and shearing effects on the material charged into the twin-screw extruder, but the polyvinyl alcohol is unplasticized polyvinyl alcohol, the heat generated due to intensive friction and shearing effects can make polyvinyl alcohol reach to its decomposition temperature before polyvinyl alcohol melts and reacts with other components; carbonization of polyvinyl alcohol make the polyvinyl alcohol unable to react with other components to form stable molten reaction products, hence powdery carbonized substance without any plasticity is obtained.

**Example 3**

This example describes the hydrophobic biodegradable material provided in the present invention, and preparation method thereof.

(1) Water is charged into polyvinyl alcohol (alcoholysis degree of 97%, and median polymerization degree of 2450) in a weight ratio of polyvinyl alcohol to water of 3.6 under stirring of 100 rpm, and the system is heated to 100°C and stirred at 100°C for 60min to give water-containing polyvinyl alcohol in which the weight ratio of polyvinyl alcohol to water is 4.2. After the system is cooled to 20° C, 70 weight parts of starch, and 12 weight parts of sorbitol are mixed in a mixer wherein the mixer stirs at 100rpm for about 7 min and then at 200rpm for about 8min; and then 18 weight parts of the obtained water-containing polyvinyl alcohol is added thereto and mixed well to give mixture M3.

(2) The mixture M3 is prepared into main material Z3 according to the same method as step (2) in the example 1.

(3) 5 weight parts of AC foaming agent is dissolved in 50 weight parts of DMSO to form a solution. 100 weight parts of the main material is immersed with the solution in a autoclave at 65°C under 10 MPa for 200 min, and then DMSO is removed under decreased pressure to give the hydrophobic biodegradable material BSR-07VS-FS3 provided in the present invention.

**Example 4**

This example describes the hydrophobic biodegradable material provided in the present invention, and preparation method thereof.

(1) Water is charged into polyvinyl alcohol (alcoholysis degree of 92%, and median polymerization degree of 2250) in a weight ratio of polyvinyl alcohol to water of 3 under stirring of 150 rpm, and the system is heated to 105° C and then stirred at 105° C for 40min to give water-containing polyvinyl alcohol in which the weight ratio of polyvinyl alcohol to water is 4.2. After the system is cooled to 25° C, 35 weight parts of the obtained water-containing polyvinyl alcohol, and 30 weight parts of starch are mixed in a mixer wherein the mixer stirs at 100rpm for about 7 min and then at 200rpm for 8min; and then 12 weight parts of glycerol, 10 weight parts of sorbitol, 2 weight parts of zinc stearate, 2 weight parts of calcium stearate, 1 weight part of borax and 8 weight parts of PHB are mixed to give mixture M4.

(2) The mixture M4 is prepared into the main material Z4 according to the same method as step (2) in the example 1.

(3) 6 weight parts of AC foaming agent is dissolved in 40 weight parts of DMSO to form a solution. 100 weight parts of the main material is immersed with the solution in a autoclave at 55°C under 5 MPa for 10 min, and then DMSO is removed under decreased pressure to give the hydrophobic biodegradable material BSR-07VS-FS4 provided in the present invention.

**Example 5**

This example describes the hydrophobic biodegradable material provided in the present invention, and preparation method thereof.

(1) Water is charged into polyvinyl alcohol (alcoholysis degree of 92%, and median polymerization degree of 2250) in a weight ratio of polyvinyl alcohol to water of 3 under stirring of 150 rpm, and the system is heated to 105°C, and then stirred at 105°C for 40min to give water-containing polyvinyl alcohol in which the weight ratio of polyvinyl alcohol to water is 4.2. After the system is cooled to 25°C, 40 weight parts of the obtained water-containing polyvinyl alcohol, 10 weight parts of glycerol, and 15 weight parts of pentaerythritol are mixed in a mixer wherein the mixer stirs at 200rpm for about 15 min and then at 300rpm for 10min; and then 2 weight parts of formaldehyde, 3 weight parts of acetic acid and 20 weight parts of starch are mixed to give mixture M5.

(2) The mixture M5 is prepared into the main material Z5 according to the same method as step (2) in the example 1.

(3) The main material Z5 is prepared into the hydrophobic biodegradable material BSR-07VS-FS5 provided in the present invention according to the same method as step (3) in the example 1.

**Example 6**

This example describes the hydrophobic biodegradable material provided in the present invention, and preparation method thereof.

(1) Water is charged into polyvinyl alcohol (alcoholysis degree of 96%, and median polymerization degree of 2050) in a weight ratio of polyvinyl alcohol to water of 1.5 under stirring of 500 rpm, and the system is heated to 105°C and then stirred at 105°C for 35min to give water-containing polyvinyl alcohol in which the weight ratio of polyvinyl alcohol to water is 2.3. After the system is cooled to 30°C, 40 weight parts of the obtained water-containing polyvinyl alcohol, 10 weight parts of glycerol, and 15 weight parts of pentaerythritol are mixed in a mixer wherein the mixer stirs at 200rpm for about 15 min and then at 400rpm for 5min; and then 22 weight parts of starch, 4 weight parts of acetic acid, 2 weight parts of succinic acid, 4 weight parts of PHB, and 3 weight parts of dimethyl urea are mixed to give mixture M6.
(2) The mixture M6 is prepared into the main material Z6 according to the same method as step (2) in the example 1.
(3) The main material Z6 is prepared into the hydrophobic biodegradable material BSR-07VS-FS6 provided in the present invention according to the same method as step (3) in the example 1.

**Table 1**

| Example No. | Example 1 | Example 2 | Example 3 | Example 4 | Example 5 | Example 6 |
|---|---|---|---|---|---|---|
| Granular product No. | BSR-07VS-FS1 | BSR-07VS-FS 2 | BSR-07VS-FS 3 | BSR-07VS-FS 4 | BSR-07VS-FS 5 | BSR-07VS-FS 6 |
| Mixture No. | M1 | M2 | M3 | M4 | M5 | M6 |
| Mixture composition (wt%) | | | | | | |
| starch | - | 50 | 70 | 30 | 20 | 22 |

(continued)

| Example No. | Example 1 | Example 2 | Example 3 | Example 4 | Example 5 | Example 6 |
|---|---|---|---|---|---|---|
| Granular product No. | BSR-07VS-FS1 | BSR-07VS-FS 2 | BSR-07VS-FS 3 | BSR-07VS-FS 4 | BSR-07VS-FS 5 | BSR-07VS-FS 6 |
| Mixture No. | M1 | M2 | M3 | M4 | M5 | M6 |
| water-containing polyvinyl alcohol | 55 | 27 | 18 | 35 | 40 | 40 |
| sorbitol | 15 | - | 12 | 10 | - | 10 |
| glycerol | 15 | 15 | - | 12 | 10 | - |
| pentaerythritol, | - | - | - | - | 25 | 15 |
| Cellulose-based polymer | 3 | - | - | - | - | - |
| Zinc stearate | 2 | - | - | 2 | - | - |
| Calcium stearate | - | - | - | 2 | - | - |
| PHB | 6 | - | - | 8 | - | 4 |
| borax | - | 5 | - | 1 | - | - |
| formaldehyde | - | - | - | - | 2 | - |
| dimethyl urea | - | - | - | - | - | 3 |
| acetic acid | - | - | - | - | 3 | 4 |
| succinic acid | - | - | - | - | - | 2 |
| epoxidized soybean oil | 4 | 3 | - | - | - | - |
| Total weight (wt%) | 100 | 100 | 100 | 100 | 100 | 100 |

**Example 7-12**

The following examples illustrate properties of the hydrophobic biodegradable material provided in the present invention.

A two-stage single-screw extruder is used. The first stage is divided into six sections from feed end to discharge end, the temperatures for each section are set at 120° C, 140° C, 145° C, 160° C and 180° C, and the rotation speed of the screw of the first stage is set at 200 rpm. The aforementioned granular products BSR-07VS-FS1 to BSR-07VS-FS6 are respectively charged into the feed port provided at the first section, melted and transferred into the second stage through a screw connecting device, and liquid butane as physical foaming aid is charged into the first stage between the fifth section and the sixth section. In the second stage single-screw extruder, the pressure is kept at 100 kg/cm$^2$, and the molten material extruded through a circle die to obtain a foamed material which is then vacuum suction molded and cut into the foam product by a molding device to obtain the required foam product FS1 to FS6.

The following methods are used to test properties of aforementioned foam products, and the test results are shown in Table 1:

The method for determining the density of the plastics specified in GB1033-1986 is used to test the density of the hydrophobic biodegradable materials BSR-07VS-FS1 to BSR-07VS-FS6 and the foam product FS1 to FS6, and the foaming ratio is calculated using the following equation:

$$\text{Foaming ratio} = (\text{Density of the hydrophobic biodegradable material} - \text{Density of the foam product}) / \text{Density of the hydrophobic biodegradable material} \times 100\%$$

According to ISO 1856 standards, the foam products are tested in terms of compression strength, resilience rate and dimension stability wherein the compression strength is represented by the stress upon deform of 10 vol%; the resilience rate is represented by the percentage of the final volume to the initial volume after the product is compressed by 50 vol% and kept for 72 hours; and the dimension stability is represented by the deform rate of product after being placed at $105\pm3°C$ for 7 days.

The method specified in ISO14855-99 is used for testing biodegradation rate of the foam products.

Water-resistance test method:

(1) The aforementioned PF1-PF6 products are completely soaked in water at 25° C for 1h, wherein the weight ratio of water to the product is 5. Then the products are taken out, water on its surface is removed, the appearance is observed, and the compression strength, resilience rate and dimension stability are determined. As a result, no significant change is observed in the appearance. Other results are shown in Table 2.

(2) The aforementioned PF1-PF6 products are placed at temperature of 30°C and relative humidity of 70% for 30 days. Then the appearance is observed, and the compression strength, resilience rate and dimension stability are determined. As a result, no significant change is observed in the appearance. Other results are shown in Table 2.

Surface stickiness test for foam product comprises respectively cutting HS1-FS6 into 20 pieces with dimension of 10cm×10cm×3cm, dividing the pieces into 10 groups (two pieces for each group), overlapping the two pieces of each group with a contacting surface of 10cm×10cm, standing for 48 hr at temperature of 30 °C and relative humidity of 70%, pressing the two pieces of each group with pressure of 1000Pa, observing whether the two pieces of each group stick together, and recording number of the group in which the pieces stuck together. Meanwhile, it is observed whether oily liquid beads appear on the surface of the products.

In Table 2, A represents the compression strength, resilience rate and dimension stability of the product determined immediately after preparation, while B represents the compression strength, resilience rate and dimension stability of the product determined after soaking in water for 1h, and C represents the compression strength, resilience rate and dimension stability at break of the product determined after keeping at relative humidity of 70% for 30 days.

**Table 2**

| Test items | | PF1 | PF2 | PF3 | PF4 | PF5 | PF6 |
|---|---|---|---|---|---|---|---|
| Density of the hydrophobic biodegradable material (kg/m3) | | 1.20 | 1.30 | 1.20 | 1.15 | 1.17 | 1.25 |
| Density of the foam product (kg/m$^3$) | | 0.51 | 0.66 | 0.60 | 0.53 | 0.55 | 0.61 |
| Foaming ratio (%) | | 57.5 | 49.2 | 50 | 53.9 | 53 | 51.2 |
| Compression strength (kPa) | A | 39 | 35 | 36 | 37 | 36 | 35 |
| | B | 37 | 32 | 30 | 36 | 35 | 34 |
| | C | 37 | 33 | 31 | 35 | 34 | 32 |
| Resilience Rate (%) | A | 78 | 76 | 79 | 82 | 80 | 76 |
| | B | 75 | 74 | 73 | 81 | 78 | 75 |
| | C | 74 | 75 | 72 | 80 | 77 | 74 |
| Dimension stability (%) | A | 1.2 | 1.5 | 1.3 | 1.2 | 1.5 | 1.3 |
| | B | 1.4 | 1.7 | 2.4 | 1.3 | 1.6 | 1.5 |
| | C | 1.5 | 1.6 | 2.5 | 1.4 | 1.7 | 1.6 |

(continued)

| Test items | | PF1 | PF2 | PF3 | PF4 | PF5 | PF6 |
|---|---|---|---|---|---|---|---|
| Biodegradation rate (%) | 45th day | 62.40 | 62.58 | 62.75 | 62.24 | 62.13 | 62.38 |
| | 60th day | 76.76 | 76.82 | 77.00 | 76.65 | 76.49 | 76.63 |
| | 99th day | 92.85 | 92.97 | 93.05 | 92.80 | 92.65 | 92.75 |
| Surface stickiness (group number) | | 4 | 2 | 5 | 3 | 0 | 0 |
| oily liquid beads appear on the surface | | Yes | Yes | Yes | Yes | No | No |

It can be observed from the results shown in Table 1 that FS1-FS6 foam products prepared from hydrophobic biodegradable granular materials BSR-07VS-FS1 to BSR-07VS-FS6 in the examples 1-6 have excellent foaming ratio (higher than 45%), compression strength (≥35 Mpa), resilience rate and dimension stability, and their biodegradation degree is extremely high (above 62% at 45th day, above 76% at 60th day, and above 93% at 99th day), which complies to the requirement (above 90% within 180 days) for biodegradable product prescribed in ISO 14855.
The products have excellent water-resistance, and have very little change in terms of the compression strength, resilience rate and dimension stability after soaking in water for lh or keeping at relative humidity of 70% for 30 days, indicating that it is safe to use the water-resistant film product of the present invention at humid conditions. In examples 1, 2 and 4-6, the polyester and/or end-capping reagent is used during preparing the hydrophobic material while the polyester or end-capping reagent is not used in example 3, such that compared with the film prepared from the hydrophobic biodegradable granular material BSR-07VS-FS3, the film prepared from the hydrophobic biodegradable granular materials BSR-07VS-FS1, BSR-07VS-FS2, and BSR-07VS-FS4 to BSR-07VS-FS6 have less change in terms of the compression strength, resilience rate and dimension stability after soaking in water for 1h or keeping at relative humidity of 70% for 30 days, indicating that their water-resistance is better.
Organic carboxylic acid is added during preparation of the hydrophobic biodegradable materials BSR-07V-FS5 and BSR-07V-FS6 in the example 5 and 6, and the foam products FS5 and FS6 prepared from BSR-07V-FS5 and BSR-07V-FS6 exhibit no sticking or no oily liquid beads appear on the surface; therefore, compared with the foam products FS1-FS4 prepared from the hydrophobic biodegradable granular materials BSR-07VS-FS1 to BSR-07VS-FS4, FS5-FS6 foam products prepared from BSR-07VS-FS5 and BSR-07VS-FS6 have significantly lower surface stickiness, and will not cause sticking among multiple products or with other product in application.

**Example 13**

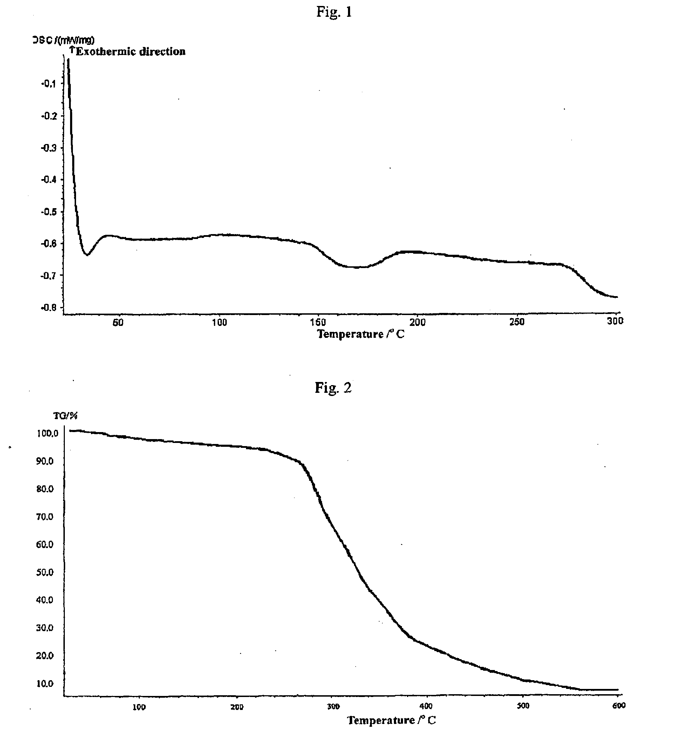

The example describes melting and thermal decomposition properties of the main material of the hydrophobic biodegradable material provided in the example 2 of the present invention.
The melting and thermal decomposition properties of the main material Z2 of the hydrophobic biodegradable granular material prepared in the example 2 are tested according to the following method.
About 4.7 mg main material Z2 obtained in the example 2 is accurately weighed, placed in a sample cell of NETZSCH DSC 204F1 Differential Scanning Calorimeter, heated from 25° C to 180° C at 10° C/min under protection of nitrogen gas with flow rate of 60 ml/min, held at 180° C for 2min, and heated at 10° C/min to 300° C to give DSC curve as shown in Fig.1.
About 4.7 mg main material Z2 obtained in the example 1 are accurately weighed, placed in a sample cell of TG209F1 Thermal Gravimetric Analyzer (NETZSCH-Geraetebau GmbH, Selb/Germany), heated from 25° C to 180° C at 10° C/min under protection of nitrogen gas with flow rate of 60 ml/min, held at 180° C for 2min, and heated at 10° C/min to 300° C to give TG curve as shown in Fig.2.
It can be observed from Fig. 1, the DSC curve of the sample shows a heat absorption peak at temperature range of 147° C-190° C, and 273° C, respectively. It can be observed from Fig.2, the sample quickly loses its weight within temperature range of 273° C-380° C, while showing substantially no weight loss within temperature range of 147° C-190° C. Combining results of Fig. 1 and Fig. 2, the heat absorption peak within 147° C-190° C of sample DSC curve is caused by heat absorption of sample melting; the heat absorption peak at about 273-380° C is accompanied by rapid weight loss of the sample, indicating that the sample decomposes at that temperature, and this heat absorption peak is caused by sample decomposition. Therefore, the main material Z2 obtained in the example 2 can achieve stable molten state at wide temperature range of 147° C-190° C which is dramatically lower than the decomposition temperature of the material, and the material can be thermoplastically processed in wide temperature range. As shown in Table 2, the foam product prepared by melting and foam molding the hydrophobic biodegradable material in the example 2 has excellent foaming ratio, compression strength, resilience rate and dimension stability. These results further explain that the material provided in the present invention is a novel thermoplastic material completely different from the simple mixture containing polyvinyl alcohol, starch, and plasticizer. The melting temperature of the material is dramatically lower than its decomposition temperature, and is also much lower than the decomposition temperature of polyvinyl alcohol or starch.

**Example 14**

This example describes properties of the hydrophobic biodegradable material in the present invention.

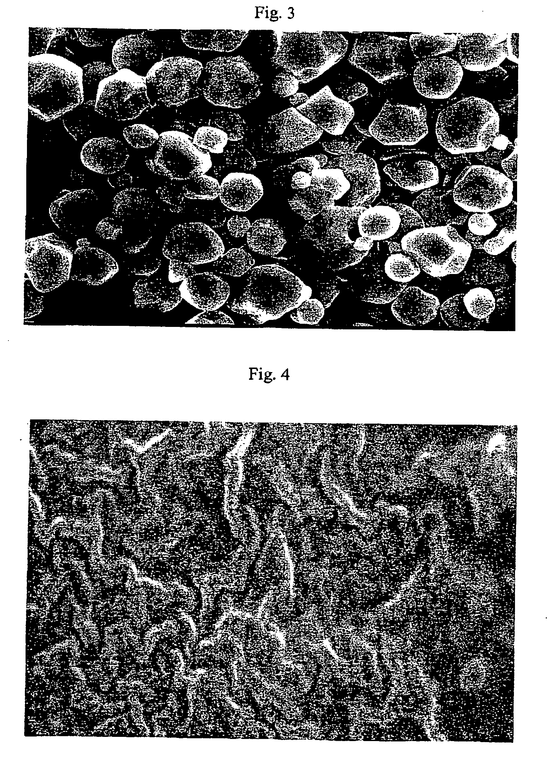

Fig. 3 and Fig. 4 respectively show SEM images (2000x) of cross sections of original granular starch used in the example 2 and the main material Z2 prepared in the example 2. The SEM images are obtained by using JSM5600LV scanning electron microscope (JEOL).

It can be clearly observed from Fig. 3 that the starch particles are spherical particles, while in Fig. 4 no starch particles can be observed. This indicates that during preparation of the granular material in the example 2, the starch particles are fully fined under the shearing force of twin screws of twin-screw extruder, and the starch is formed into a single uniform product with other components rather than a simple physically mixed mixture. This further explains that the hydrophobic biodegradable material provided in the present invention is a novel material completely different from the simple mixture containing polyvinyl alcohol, starch, and plasticizer.

Moreover, results in Table 2 show that the product prepared from the hydrophobic biodegradable material provided by example 2 of the present invention has significantly improved foaming ratio, compression strength, resilience rate and dimension stability, superior to those of products prepared from any single component in the material. This also explains that the main material provided by the present invention is a totally new reaction product completely different from the simple mixture of the prior art.

**Claims**

1.  A method for preparing a hydrophobic biodegradable material, comprising the following steps:

    (1) allowing hydrophobic polyvinyl alcohol to contact with water alone and fully swell to give water-containing polyvinyl alcohol;
    (2) mixing the water-containing polyvinyl alcohol with polyol, and optionally starch to obtain a mixture, wherein the polyol is one or more selected from ethylene glycol, diethylene glycol, propylene glycol, glycerol, sorbitol, polyethylene glycol or its condensate having a molecular weight of 400 or lower, pentaerythritol, and incomplete esterification product of long-chain fatty acid;
    (3) melting the said mixture, and then extruding and granulating the molten material to obtain a main material; and
    (4) mixing the main material with foaming agent.

2.  The method according to claim 1, wherein the weight ratio of the usage amount of polyvinyl alcohol to the usage amount of water is 0.5-5.

3.  The method according to claim 2, wherein the weight ratio of the usage amount of polyvinyl alcohol to the usage amount of water is 1-4.

4.  The method according to claim 1, wherein the contacting of polyvinyl alcohol and water is carried out at 80-105°C for 30-60 minutes under stirring of 50-650rpm.

5.  The method according to claim 1, wherein based on the total weight of the obtained mixture, water-containing polyvinyl alcohol is added at the amount of 15-60wt%, starch is added at the amount of 20-75wt%, and polyol is added at the amount of 10-40wt%.

6.  The method according to any one of claims 1-5, wherein the hydrophilic polyvinyl alcohol has an alcoholysis degree of 80-100%, and median polymerization degree from more than 2000 to 3000.

7.  The method according to claim 1, wherein the process of extruding and granulating is carried out by using a twin-screw extruder at the conditions that the twin-screw extruder has length/diameter ratio of 20-64 and screw rotation speed of 50-1500rpm, temperature for each section are sequentially set at 90-150°C, 95-155°C, 100-160°C, 115-165°C, 120-175°C, 125-175°C, 130-185°C, 135-185°C, 110-180°C, 115-175°C, 120-185°C and 130-180°C, the fourth and tenth sections are vacuum sections and vacuum degree of the vacuum sections is 0.02-0.09MPa.

8. The method according to claim 1, wherein in step (2), polyester is further added in an amount of 0.5-15 wt% based on the total weight of the mixture, and the polyester is one or more selected from polycaprolactone, polycarbonate, poly β-hydrobutyrate.

9. The method according to claim 1, wherein in step (2), an end-capping reagent is further added in an amount of 0.5-15 wt% based on the total weight of the mixture, and the end-capping reagent is one or more selected from borax, boric acid, formaldehyde, bialdehyde, trimethyl melamine, bimethyl urea, bimethyl ethyl urea, dichromate, chromium nitrate, and organotitanate.

10. The method according to claim 1, wherein in step (2), an organic carboxylic acid having 1-20 carbon atoms is further added in an amount of 0.5-10 wt% based on the total weight of the mixture.

11. The method according to claim 1, wherein the weight ratio of the main material to the foaming agent is 10: 1 to 1000: 1.

**Patentansprüche**

1. Verfahren zur Herstellung eines hydrophoben biologisch abbaubaren Materials, das die folgenden Schritte umfasst:

    (1) ermöglichen, dass hydrophober Polyvinylalkohol mit Wasser allein in Kontakt kommt und vollständig aufquillt, damit sich wasserenthaltender Polyvinylalkohol ergibt;
    (2) Mischen des wasserenthaltenden Polyvinylalkohols mit Polyol und gegebenenfalls Stärke, um eine Mischung zu erhalten, wobei das Polyol ein oder mehr ausgewählt aus Ethylenglykol, Diethylenglykol, Propylenglykol, Glycerin, Sorbitol, Polyethylenglykol oder dessen Kondensat mit einem Molekulargewicht von 400 oder weniger, Pentaerythrit und unvollständigem Esterifizierungsprodukt von langkettiger Fettsäure ist;
    (3) Schmelzen der Mischung und dann extrudieren und granulieren des geschmolzenen Materials, um ein Hauptmaterial zu erhalten; und
    (4) Mischen des Hauptmaterials mit Schäummittel.

2. Verfahren gemäß Anspruch 1, wobei das Gewichtsverhältnis zwischen der verwendeten Menge Polyvinylalkohol und der verwendeten Menge Wasser 0,5-5 ist.

3. Verfahren gemäß Anspruch 2, wobei das Gewichtsverhältnis zwischen der verwendeten Menge Polyvinylalkohol und der verwendeten Menge Wasser 1-4 ist.

4. Verfahren gemäß Anspruch 1, wobei das Kontaktieren von Polyvinylalkohol und Wasser unter Rühren bei 50-650 rpm 30-60 Minuten lang bei 80-105 °C durchgeführt wird.

5. Verfahren gemäß Anspruch 1, wobei, basierend auf dem Gesamtgewicht der erhaltenen Mischung, wasserenthaltender Polyvinylalkohol bei der Menge von 15-60 Gewichtsprozent hinzugefügt wird, Stärke bei der Menge von 20-75 Gewichtsprozent hinzugefügt wird und Polyol bei der Menge von 10-40 Gewichtsprozent hinzugefügt wird.

6. Verfahren gemäß einem der Ansprüche 1-5, wobei der hydrophobe Polyvinylalkohol einen Alkoholysegrad von 80-100 % aufweist und einen mittleren Polymerisationsgrad von mehr als 2000 bis 3000.

7. Verfahren gemäß Anspruch 1, wobei der Prozess des Extrudierens und des Granulierens durchgeführt wird in dem ein Doppelschneckenextruder verwendet wird und zwar unter den Bedingungen, dass der Doppelschneckenextruder ein Längen/Durchmesser-Verhältnis von 20-64 aufweist und eine Schneckendrehgeschwindigkeit von 50-1500 rpm, die Temperatur für jeden Bereich sequenziell auf 90-150 °C, 95-155 °C, 100-160 °C, 115-165 °C, 120-175 °C, 125-175 °C, 130-185 °C, 135-185 °C, 110-180 °C, 115-175 °C, 120-185 °C und 130-180 °C festgesetzt wird, der vierte und der zehnte Bereich Vakuumbereiche sind und der Vakuumgrad des Vakuumbereichs 0,02-0,09 MPa ist.

8. Verfahren gemäß Anspruch 1, wobei in Schritt (2) zusätzlich Polyester in einer Menge von 0,5-15 Gewichtsprozent basierend auf dem Gesamtgewicht der Mischung hinzugefügt wird und das Polyester ein oder mehr ausgewählt aus Polycaprolacton, Polycarbonat, Poly-β-hydrobutyrat ist.

9. Verfahren gemäß Anspruch 1, wobei in Schritt (2) zusätzlich ein endverschließendes Reagenz in einer Menge von 0,5-15 Gewichtsprozent basierend auf dem Gesamtgewicht der Mischung hinzugefügt wird und das endverschließende Reagenz ein oder mehr ausgewählt aus Borax, Borsäure, Formaldehyd, Bialdehyd, Trimethylmelamin, Bimethylurea, Bimethylethylurea, Dichromat, Chromnitrat und Organotitanat ist.

10. Verfahren gemäß Anspruch 1, wobei in Schritt (2) zusätzlich eine organische Carbonsäure mit 1-20 Kohlenstoffatomen in einer Menge von 0,5-10 Gewichtsprozent basierend auf dem Gesamtgewicht der Mischung hinzugefügt wird.

11. Verfahren gemäß Anspruch 1, wobei das Gewichtsverhältnis zwischen dem Hauptmaterial und dem Schäummittel 10:1 bis 1000:1 beträgt.


**Revendications**

1. Procédé de préparation d'un matériau biodégradable hydrophobe, comprenant les étapes suivantes :

   (1) laisser un alcool polyvinylique hydrophobe venir en contact avec de l'eau seule et gonfler complètement pour donner un alcool polyvinylique contenant de l'eau ;
   (2) mélanger l'alcool polyvinylique contenant de l'eau avec un polyol, et éventuellement de l'amidon, de façon à obtenir un mélange, dans lequel le polyol est un ou plusieurs composés choisis parmi l'éthylène glycol, le diéthylène glycol, le propylène glycol, le glycérol, le sorbitol, le polyéthylène glycol ou son condensat ayant une masse moléculaire de 400 ou plus basse, le pentaérythritol, et un produit d'estérification incomplète d'un acide gras à longue chaîne ;
   (3) fondre ledit mélange, puis extruder et granuler le matériau fondu de façon à obtenir un matériau principal ; et
   (4) mélanger le matériau principal avec un agent moussant.

2. Procédé selon la revendication 1, dans lequel le rapport pondéral de la quantité d'utilisation d'alcool polyvinylique sur la quantité d'utilisation de l'eau va de 0,5 à 5.

3. Procédé selon la revendication 2, dans lequel le rapport pondéral de la quantité d'utilisation d'alcool polyvinylique sur la quantité d'utilisation de l'eau va de 1 à 4.

4. Procédé selon la revendication 1, dans lequel la mise en contact d'alcool polyvinylique et d'eau est effectuée à 80 à 105 °C pendant 30 à 60 minutes sous une agitation de 50 à 650 tr/min.

5. Procédé selon la revendication 1, dans lequel sur base du poids total du mélange obtenu, de l'alcool polyvinylique contenant de l'eau est ajouté à raison de 15 à 60 % en poids, de l'amidon est ajouté à raison de 20 à 75 % en poids, et du polyol est ajouté à raison de 10 à 40 % en poids.

6. Procédé selon l'une quelconque des revendications 1 à 5, dans lequel l'alcool polyvinylique hydrophile a un degré d'alcoolyse de 80 à 100 %, et un degré médian de polymérisation supérieur à 2000 à 3000.

7. Procédé selon la revendication 1, dans lequel le procédé d'extrusion et de granulation est effectué en utilisant une extrudeuse à vis jumelées aux conditions où l'extrudeuse à vis jumelées a un rapport longueur/diamètre de 20 à 64 et une vitesse de rotation de vis de 50 à 1500 tr/min, la température pour chaque section est réglée successivement à 90-150 °C, 95-155 °C, 100-160 °C, 115-165 °C, 120-175 °C, 125-175 °C, 130-185 °C, 135-185 °C, 110-180 °C, 115-175 °C, 120-185 °C et 130-180 °C, les quatrième et dixième sections sont des sections sous vide et le degré de vide des sections sous vide va de 0,02 à 0,09 MPa.

8. Procédé selon la revendication 1, dans lequel dans l'étape (2), du polyester est en outre ajouté en une quantité de 0,5 à 15 % en poids sur base du poids total du mélange, et le polyester est un ou plusieurs composés choisis parmi le polycaprolactone, le polycarbonate, le poly β-hydrobutyrate.

9. Procédé selon la revendication 1, dans lequel dans l'étape (2), un réactif de coiffe terminale est en outre ajouté en une quantité de 0,5 à 15 % en poids sur base du poids total du mélange, et le réactif de coiffe terminale est un ou plusieurs composés choisis parmi le borax, l'acide borique, le formaldéhyde, le bialdéhyde, la triméthyl-mélamine, la biméthyl-urée, la biméthyl-éthyl-urée, le dichromate, le nitrate de chrome, et un organotitanate.

10. Procédé selon la revendication 1, dans lequel dans l'étape (2), un acide carboxylique organique ayant 1 à 20 atomes de carbone est en outre ajouté en une quantité de 0,5 à 10 % en poids sur base du poids total du mélange.

11. Procédé selon la revendication 1, dans lequel le rapport pondéral du matériau principal sur l'agent moussant va de 10 : 1 à 1000 : 1.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1405230 A

- CN 1357563 A